# EUROPEAN PATENT SPECIFICATION

(11) **EP 4 275 151 B1**
(45) Date of publication and mention of the grant of the patent: **10.09.2025**
(21) Application number: 22722373.2
(22) Date of filing: 01.04.2022
(51) Int. Cl.: G06N 3/084, G06F 16/9536, G06N 3/09, G06N 3/096

(54) **TRANSFER MACHINE LEARNING FOR ATTRIBUTE PREDICTION**
TRANSFERMASCHINENLERNEN ZUR ATTRIBUTVORHERSAGE
APPRENTISSAGE AUTOMATIQUE PAR TRANSFERT POUR LA PRÉDICTION D'ATTRIBUTS

(43) Date of publication of application: 15.11.2023
(73) Proprietor: Google LLC, Mountain View, CA 94043 (US)
(72) Inventor: HUANG, Wei, Mountain View, CA 94043 (US); MAYOROV, Alexander E., Mountain View, CA 94043 (US)
(74) Representative: Marks & Clerk GST
(86) International application number: PCT/US2022/023046
(87) International publication number: WO 2023/191811

(56) References cited:
- US-A1- 2019 042 976
- US-B2- 11 263 241

## Description

### TECHNICAL FIELD

This specification relates to data processing and transfer machine learning.

### BACKGROUND

Machine learning models receive an input and generate an output, e.g., a predicted output, based on the received input. Some machine learning models are parametric models and generate the output based on the received input and on values of the parameters of the model.

Some machine learning models are deep learning models that employ multiple layers of models to generate an output for a received input. For example, a deep neural network is a deep learning model that includes an output layer and one or more hidden layers that each apply a non-linear transformation to a received input to generate an output.

US11263241B2 describes an intelligent user interface that predicts tasks for users to complete using a trained machine-learning model. In some implementations, when a user accesses the intelligent user interface, the available tasks and a user profile can be inputted into the trained machine-learning model to output a prediction of one or more tasks for the user to complete. The trained machine-learning model outputs a prediction of tasks that the user will likely need to complete, based at least in part on the user's profile and previous interactions with applications.

### SUMMARY

This specification describes a system implemented as computer programs on one or more computers in one or more locations that uses transfer machine learning techniques to predict attributes.

In a first aspect, there is provided a computer-implemented method according to claim 1. Optional features are set out in claims 2 to 8.

In a second aspect, there is provided a system according to claim 9.

In a third aspect, there is provided one or more computer storage media according to claim 10.

In a fourth aspect, there is provided a computer program product according to claim 11.

In general, one innovative aspect of the subject matter described in this specification can be embodied in methods that include receiving, from a client device of a user, a digital component request including at least input contextual information for a display environment in which a selected digital component will be displayed; converting the contextual information into input data including input feature values for a transfer machine learning model trained to output predictions of user attributes of users based on feature values for features representing display environments, where the transfer machine learning model is (i) trained using training data for subscriber users obtained from a data pipeline associated with electronic resources to which the subscriber users are subscribed and (ii) adapted to predict user attributes of non-subscribing users viewing electronic resources to which the non-subscribing users are not subscribed, where the training data includes first feature values for features representing training contextual information for display environments in which digital components were displayed to the subscriber users, second feature values for online activity of the subscriber users, and a label representing a user attribute profile for each of the subscriber users; providing, as an input to the transfer machine learning model, the input data; receiving, as an output of the transfer machine learning model, data indicating a set of predicted user attributes of the user; selecting, from multiple digital components and based at least in part on the set of predicted user attributes, a given digital component for display at the client device; and sending the given digital component to the client device of the user. Other implementations of this aspect include corresponding apparatus, systems, and computer programs, configured to perform the aspects of the methods, encoded on computer storage devices.

These and other implementations can each optionally include one or more of the following features. In some aspects, the electronic resources to which the subscriber users are subscribed include content platforms that display content to the subscribing users. In some aspects, the training contextual information for display environments in which digital components were displayed to the subscriber users includes client device attributes of subscribing users. The client device attributes of each individual client device can include at least one of information indicative of one or more of an operating system of the individual client device or a type of browser of the individual client device.

In some aspects, the training contextual information for display environments in which digital components were displayed to the subscriber users includes, for each user visit to the electronic resources to which the subscriber users are subscribed, at least one of information indicative of an electronic resource address of the electronic resource, a category of the electronic resource, (iii) a time at which the user visit occurred, a geographic location of a client device used to visit the electronic resource, or a type of data traffic for the user visit.

In some aspects, the second feature values for online activity of the subscriber users comprise feature values for features indicative of digital components with which the subscriber users interacted during the user visits, including feature values indicative of a category for each digital component. In some aspects, the second feature values for online activity of the subscriber users include feature values for features indicative of one or more of selecting a user selectable element, providing a search query, or viewing a particular page.

Some aspects include generating the transfer machine learning model based on the first feature values and the second feature values. Generating the transfer machine learning model can include training a neural network with an objective function.

Some aspects include providing the set of predicted user attributes of the user as input to a second machine learning model trained to predict user engagement with digital components based on user attributes and receiving, as an output of the second machine learning model and for each digital component in the multiple digital components, output data indicating a predicted likelihood that the user will interact with the digital component. Selecting the given digital component can include selecting the given digital component based at least on the predicted likelihood for each of the plurality of digital components.

The subject matter described in this specification can be implemented in particular embodiments so as to realize one or more of the following advantages. Third-party cookies used to collect data from client devices across the Internet are increasingly being removed from use to prevent the collection and leakage of sensitive user data. The approaches described herein can predict user attributes without using third-party cookies by training a transfer machine learning model. Training the transfer machine learning model can include training a machine learning model using data collected through a first data pipeline of one or more content platforms and adapting the machine learning model for use in a second data pipeline in which more limited types of data are available. In this way, the transfer machine learning model is trained using a more robust set of data to make accurate predictions in situations in which limited data is available. The user attributes predicted using transfer machine learning are used to efficiently distribute contents to users, thereby improving a user's experience accessing desired electronic resources. Thus, the techniques described in this document enable the accurate prediction of attributes without requiring such sensitive data.

Using transfer machine learning instead of data collected using third-party cookies to predict attributes can reduce the computational resources (e.g., processor cycles) and network resources (e.g., consumed bandwidth). Aggregated across thousands or millions of client devices, the computation and bandwidth savings are substantial.

The details of one or more embodiments of the subject matter of this specification are set forth in the accompanying drawings and the description below. Other advantages of the subject matter will become apparent from the description, the drawings, and the claims.

### BRIEF DESCRIPTION OF THE DRAWINGS

FIG. 1 shows an example computing environment in which a digital component distribution system uses transfer learning to distribute digital components.
FIG. 2 shows an example system that uses transfer learning for predicting user attributes of a user and provides digital components based on the predicted user attributes.
FIGS. 3A-3B show example machine learning architectures for training transfer machine learning models.
FIG. 4 is a flow diagram of an example process for predicting attributes using a transfer learning model and sending a digital component to a client device based on the predicted attributes.
FIG. 5 is a block diagram of an example computer system.

Like reference numbers and designations in the various drawings indicate like elements.

### DETAILED DESCRIPTION

This specification describes techniques and systems for using transfer machine learning to predict attributes of users without using information from third-party cookies. Historically, third-party cookies have been used to collect information about users' online activities across different domains. The collected information about the user is often used to customize the users' browsing experience, e.g., by displaying personalized content. Without using information collected by the third-party cookies, the system described herein predicts attributes of the users by applying transfer machine learning to contextual information for display environments in which users view and interact with electronic resources.

The electronic resources include resources (e.g., a particular website, a mobile application, or a content platform such as a video sharing platform or e-mail service) to which some users are subscribed to view content of the electronic resources. For subscribing users that subscribe to an electronic resource, a publisher of the resource can obtain and store, in a user profile, data representing self-declared user attributes for at least a subset of users (e.g., self-declared geographic location for an e-mail user).

The system trains a machine learning model to predict user attributes of users based on features related to subscribing users for which user attribute information and additional information is available. The system can then adapt the trained machine learning model using transfer learning techniques to generate a transfer machine learning model that can predict user attributes of users when more limited information is available, e.g., when the identity of the user is unknown and/or when less or different contextual information is available. For example, the system can train the machine learning model using data obtained using a data pipeline associated with electronic resources to which users are subscribed and for which user attribute information and/or user online activity is available. The transfer machine learning model can then be deployed in different digital component distribution pipelines in which limited information is available for selecting digital components.

Using the described transfer learning techniques, the system can predict user attributes of users and select digital components to provide to users quickly, e.g., in real time (e.g., within milliseconds) in response to receiving a digital component request, based on the predicted user attributes. This can also reduce wasted network bandwidth owing to digital components being sent to a user that are not desired. In some implementations, the system predicts the user attributes of a user based on the similarity between the user's activity and activities by other users with known user attribute profiles from one or more electronic resources.

As used throughout this specification, the phrase "digital component" refers to a discrete unit of digital content or digital information (e.g., a video clip, audio clip, multimedia clip, image, text, or another unit of content). A digital component can electronically be stored in a physical memory device as a single file or in a collection of files, and digital components can take the form of video files, audio files, multimedia files, image files, or text files and include advertising information, such that an advertisement is a type of digital component. For example, the digital component may be content that is intended to supplement content of a web page or other resource presented by the application. More specifically, the digital component may include digital content that is relevant to the resource content (e.g., the digital component may relate to the same topic as the web page content, or to a related topic). The provision of digital components can thus supplement, and generally enhance, the web page or application content.

Further to the descriptions throughout this document, a user may be provided with controls (e.g., user interface elements with which a user can interact) allowing the user to make an election as to both if and when systems, programs, or features described herein may enable collection of user information (e.g., information about a user's social network, social actions, or activities, profession, a user's preferences, or a user's current location), and if the user is sent content or communications from a server. In addition, certain data may be treated in one or more ways before it is stored or used, so that personally identifiable information is removed. For example, a user's identity may be treated so that no personally identifiable information can be determined for the user, or a user's geographic location may be generalized where location information is obtained (such as to a city, ZIP code, or state level), so that a particular location of a user cannot be determined. Thus, the user may have control over what information is collected about the user, how that information is used, and what information is provided to the user.

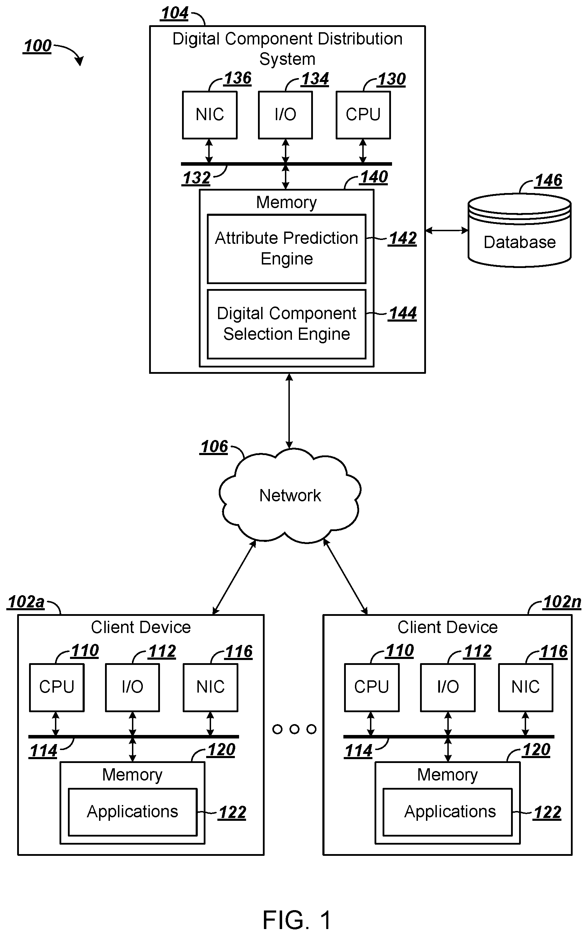

FIG. 1 illustrates an example computing environment 100 in which a digital component distribution system uses transfer learning to distribute digital components. The environment 100 includes multiple client devices 102a through 102n in communication with a digital component distribution system 104 via a network 106, which may be a wired or wireless network or any combination thereof. In some implementations, the digital component distribution system 104 is implemented using one or more computers. The network 106 can be a local area network (LAN), a wide area network (WAN), the Internet, a mobile network, or any combination thereof. Each client device 102a through 102n (referred to collectively as client devices 102) includes a processor (e.g., central processing unit) 110 in communication with input/output devices 112 via a bus 114. The input/output devices 112 can include a touch display, keyboard, mouse, and the like.

A network interface circuit 116 is also connected to the bus 114 to provide wired and/or wireless connectivity to the network 106. A memory or other storage medium 120 is also connected to the bus 114. The memory 120 stores instructions executed by the processor 110. In particular, the memory 120 stores instructions for an applications 122. The applications 122 can be configured to communicate with the digital component distribution system 104.

In some implementations, each client device 102 is a mobile device (e.g., smartphone, laptop, tablet, wearable device, digital assistant device, etc.). In some implementations, each client device 102 is a streaming device or gaming device or console. The application 122 can include one or more electronic resources including native applications (e.g., an email application) and web browsers displayed by the application 122 (e.g., a social media platform). The environment 100 has access to information from the application 122, such as the user's activity using the application 122.

The client device 102 executes one or more applications 122, such as web browsers and/or native applications, to facilitate the sending and receiving of data over the network 106. A native application is an application developed for a particular platform or a particular device (e.g., mobile devices having a particular operating system). Publishers can develop and provide, e.g., make available for download, native applications to the client devices 102. A web browser can request an electronic resource (also referred to as a resource) from a web server that hosts a website of a publisher, e.g., in response to the user of the client device 102 entering the resource address for the resource in an address bar of the web browser or selecting a link that references the resource address. Similarly, a native application can request application content from a remote server of a publisher.

The digital component distribution system 104 includes a processor 130, bus 132, input/output devices 134 and a network interface circuit 136 to provide connectivity to the network 106. A memory 140 is connected to the bus 132. The memory 140 stores an attribute prediction engine 142 and a digital component selection engine 144 with instructions executed by the processor 130 to implement operations described throughout this document. In some implementations, the environment 100 includes a database 146, in communication with the digital component distribution system 104, that stores information for use by the attribute prediction engine 142, and/or the digital component selection engine 144.

The attribute prediction engine 142 implements machine learning techniques, e.g., training and/or adapting a transfer machine learning model, applying the model to predict user attributes of users, and retraining the model as necessary (described in more detail below).

To train the transfer machine learning model, the attribute prediction engine 142 obtains and/or generates training data for a set of users. The training data can include contextual information for display environments in which digital components and/or content was displayed to the users, user activity, e.g., online activity, of the users, and/or user attribute information for the users. Without the use of third-party cookies, such contextual and user activity information may not be available for training a machine learning model.

To obtain such information, the attribute prediction engine 142 can interface with a data pipeline of electronic resources to which users subscribe to view content and typically log in to view the content. In this way, the attribute prediction engine 142 can have access to information about subscriber users that are logged into the electronic resources, the contextual information for display environments in which digital components are displayed to the subscribing users, and user attribute information for the subscribing users. For example, a publisher of an electronic resource can receive requests for content from subscribing users who are logged into the electronic resource and provide the content along with digital components that are displayed with the digital components. Such requests can include the contextual information. The publisher can store this information along with information indicating digital components provided for display with the content and data indicating user activity that occurred with respect to the electronic resource, e.g., whether the displayed digital component was interacted with, e.g., selected, by the user.

The user attribute information for each user can include self-declared and/or inferred user attributes. For example, a user can provide user attribute information to a content platform (or other electronic resource) using the application 122 when subscribing to the content platform or to update previously provided user attribute information. In another example, the content platform can infer the user attributes for users based on survey results, online activity, etc. The user attribute information for the users can include demographic information.

The contextual information for display environments in which digital components are displayed can include client device attributes of the subscribing users, e.g., information indicative of an operating system of the client device 102 used by the user to view content of the electronic resource, a type of browser or native application used to view the content at the client device 102, a display size or type of the client device 102, and/or other appropriate information about the client device 102.

The contextual information for display environments in which digital components are displayed can include, for each user visit to the electronic resource, a resource address (e.g., a Uniform Resource Identifier (URI) or Uniform Resource Locator (URL)) for the resource, a category of the electronic resource (e.g., a topic-based category assigned to the electronic resource), a time (e.g., time of day, day of week, month of year, etc.) at which the user visit occurred, a geographic location of the client device when the user visit occurred, a type of data traffic for the user visit, and/or other appropriate contextual information. Examples of types of data traffic include whether the data includes images or videos, the type or category of video the user watched, the type or category of video channel that the user watched, the operating system of the device that transmitted the data, and the type of device used to send the data.

The user activity information for a subscriber user can include electronic resources that the user has subscribed to, e.g., over a time period, the user's interaction with content displayed with the electronic resource, e.g., content of the electronic resource and/or digital components displayed with the content. For example, the user activity information for a user visit to an electronic resource can include the contextual information for the user visit as well and user interaction data indicating whether or not the user interacted with any of the content and, if so, information about the interaction, e.g., the type of interaction and/or data indicating the content interacted with. The information for the content, e.g., digital components, can include data identifying content, one or more categories assigned to the content (e.g., one or more vertical categories), weights corresponding to each category, and/or other appropriate information about the content.

The attribute prediction engine 142 trains a transfer machine learning model using the training data. The attribute prediction engine 142 can use the training data to train a machine learning model to output predicted user attributes for a user based on contextual information for a display environment in which the user is viewing content or about to view content. As the types of contextual information can vary based on the types of electronic resources being accessed by users and/or data pipelines associated therewith, the attribute prediction engine 142 can adapt the machine learning model for use in different pipelines, e.g., based on the types of contextual information available in the different pipelines. The output of this adaptation is a transfer machine learning model.

For example, the attribute prediction engine 142 can train the machine learning model based on training data obtained using a data pipeline of a video sharing platform. The attribution prediction engine 142 can use transfer learning techniques to adapt this machine learning model for use in predicting user attributes of unknown users that submit search queries to a search engine or of unknown users visiting a particular web site. This can include, for example, applying adaptation in the transferred domain. The adaptation stage can be similar to another machine learning model training, except that the model is initialized by the domain parameters (from the source domain), but with the transferred domain data. In the adaptation stage, the attribute prediction engine 142 can use the data from the source domain as label data for training the transfer machine learning model using machine learning model training techniques, as described in this document. The knowledge from the source domain can be used as ground truths for the adaptation stage when adapting the trained machine learning model to the transfer machine learning model that is adapted to the transfer domain. The attribute prediction engine 142 can train the transfer learning machine learning model to output attribution predictions for input data that is available in the transfer domain using the knowledge from the source domain (e.g., the machine learning model, its parameters, etc.). For example, this adaptation can map features of input data available in the transfer domain to features from the source domain and adjust the model to perform attribute predictions for the features of input data that is available in the transfer domain based on the knowledge of the mapped features in the source domain.

The digital component selection engine 144 uses the predicted user attributes outputted by the transfer machine learning model to provide digital components or personalized content to a user's client device 102. For example, based on the predicted user attributes of a particular user, the digital component selection engine 144 provides digital components that may be beneficial or of particular interest to the user.

Some resources, application pages, or other application content can include digital component slots for presenting digital components with the resources or application pages. The digital component slot can include code (e.g., scripts) that cause the application 122 to request a digital component from the digital component distribution system 104. For example, the code can cause the application 122 to send a digital component request that includes contextual information for a display environment in which the user is viewing content or about to view content. The attribute prediction engine 142 can use this contextual information to predict user attributes of the user of the application 122 and provide the user attributes to the digital component selection engine 144. In turn, the digital component selection engine 144 can select a digital component to provide to the application 122 for display to the user, e.g., with content of an electronic resource being displayed by the application 122.

The digital component selection engine 144 can select a digital component from a set of digital components based at least on the predicted user attributes of the user. For example, a digital component can be linked to distribution criteria that indicates that the digital component is eligible for display to users having one or more user attributes. In this example, the digital component selection engine 144 can select the digital component when the user attributes of the distribution criteria match the predicted user attributes for the user. This ensures that the digital component selected is appropriate for the user and will not waste bandwidth when it is sent to the user.

The digital component selection engine 144 can select a digital component based on the predicted user attributes in combination with other information. For example, the digital component selection engine 144 can select a digital component based on the predicted user attributes in combination with the current time, the location of the client device 102 that sent the digital component request, the contextual information of the digital component request, distribution criteria for the digital components, and/or selection values indicating amounts that digital component providers are willing to provide to publishers for displaying the digital components.

The contextual information included in a digital component request can include similar contextual information as described above as part of the training data. However, some such information may not be available in the contextual information of the digital component request and/or different contextual information may be included than that of the training data. For example, the contextual information of the digital component request can include client device attributes of the client device 102 that sent the digital component request, contextual information related to the electronic resource being displayed by the application 122 (e.g., URI or URL, categories, etc.), time, location, traffic type, etc.

In some implementations, the digital component distribution system 104 processes information in the database 146 (e.g., by generating fast-access identifiers or references) such that the access to the information is computationally efficient. For example, the digital component distribution system 104 can apply the filter of a particular user to the database 146 to obtain records associated with the particular user. In some implementations, the digital component distribution system 104 optimizes a structure of the database 146 based on a data processing bandwidth to facilitate load balancing and efficient processing of data.

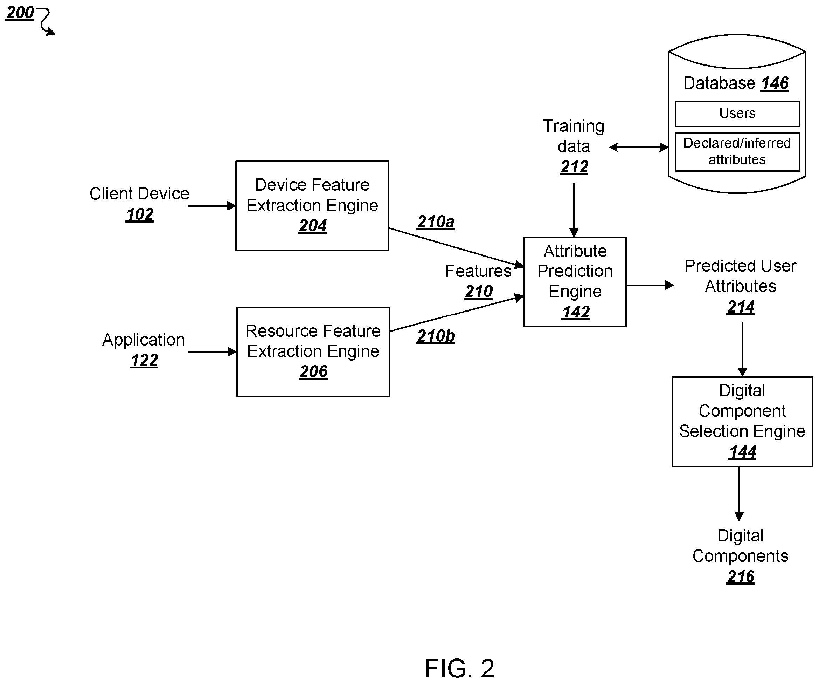

FIG. 2 shows an example system 200 that uses transfer learning for predicting user attributes of a user and provides digital components based on the predicted user attributes. The system 200 includes a device feature extraction engine 204 that receives information about the client device 102 and generates a first set of features 210a indicative of the user's device attributes. The first set of features include an operating system of the client device 102, type of traffic (e.g., access from a mobile phone), type of browser of the client device 102, location, and/or local time associated with the user's interactions with the client device 102.

The system 200 includes a resource feature extraction engine 206 that receives data from the application 122 and generates a second set of features 210b indicative of the user activities interacting with one or more electronic resources. The second set of features can include, for an electronic resource being displayed or about to be displayed to the user, a resource address for the electronic resource, a category of the electronic resource, and/or other appropriate features.

As described above, the application 122 can display one or more electronic resources to the user and request, from a digital component distribution system 104, digital components to display with the electronic resources. This digital component request can include contextual information for a display environment in which a selected digital component will be displayed. The device feature extraction engine 204 and the resource feature extraction engine 206 can extract relevant information, e.g., relevant contextual information, from the digital component request and convert the information into feature values for input into a transfer machine learning model. Although not shown in FIG. 1, the digital component distribution system 104 of FIG. 1 can include the device feature extraction engine 204 and the resource feature extraction engine 206.

The attribute prediction engine 142 is configured to process the first set of features 210a or/and the second set of features 210b (collectively features 210) to generate predicted user attributes 214 of the user. Generating predicted user attributes 214 is based on a pre-trained transfer machine learning model. As described above, the transfer machine learning model can be trained using training data 212 that includes data can include contextual information for display environments in which digital components and/or content was displayed to the users, user activity, e.g., online activity, of the users, and/or user attribute information for the users. The training data 212 includes training labels indicating users with known (either self-declared or inferred) user attribute profiles. The attribute prediction engine 142 can access the training data 212 from the database 146.

The system 200 includes the digital component selection engine 144 that receives predicted user attributes 214, selects a digital component based on the predicted user attributes 214, and provides the digital component 216 to a client device of the user. The digital component selection engine 144 communicates with the application 122, e.g., via the network 106, to enable such display.

In some implementations, the digital component selection engine 144 can use a trained machine learning model to select a digital component based on information indicating the users' engagement with displayed digital components. The information indicating the users' engagement with digital component can include information indication that a user selected a user-selectable item (e.g., a digital component) and viewed a particular page (e.g., watching a recommended video) after viewing a digital component in a particular display environment characterized by particular contextual information. The machine learning model can be trained based on information related to digital components, information related to user engagement with the digital components, e.g., whether the users interacted with the digital components when displayed to the users, and labels indicating user attributes of users that the digital components were displayed to and their respective engagement with the digital components. The machine learning model can be trained to take as input predicted user attributes 214 of a user and output, for each digital component in a set of digital components, a likelihood that a user having the predicted user attributes 214 will interact with the digital components.

In some implementations, this machine learning model also takes into account the contextual information for the display environment in which the selected digital component will be displayed. For example, the machine learning model can take as input the predicted user attributes 214 and the feature values for the features 210 and output, for each digital component in a set of digital components, a likelihood that a user having the predicted user attributes 214 will interact with the digital components when displayed in a display environment having the contextual information for the display environment in which the selected digital component will be displayed.

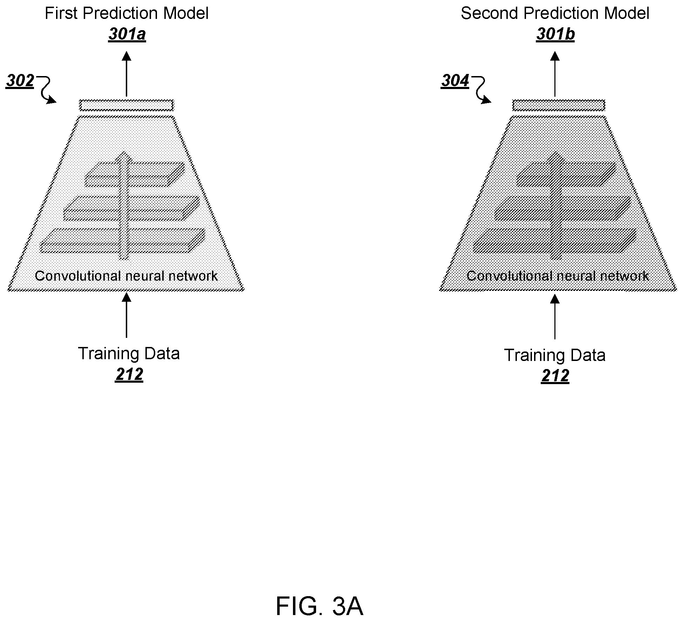

FIGS. 3A-3B show example machine learning architectures 302, 304, and 306 for training transfer machine learning models. Referring to FIG. 3A, a system, e.g., the digital component distribution system 104 of FIG. 1, can train one or more prediction models, each corresponding to predicting a set of user attributes. As a particular example for user attributes prediction, the system can use a first architecture 302 to train a first prediction model 301a that can be used to predict basic user attributes, e.g., gender and age distribution. A second architecture 304 can be used to train a second prediction model 301b to predict extended demographics, e.g., occupation, shoe size, etc. To do so, each architecture 302 and 304 can use different training data to generate their respective prediction models 301a and 301b, respectively.

In another example, each architecture 302 and 304 can be trained using different training data based on the training data available. For example, the architecture 301a can be used to train a prediction model 301a using declared user attributes provided by users along with the contextual information and feature values for online activity of users. The architecture 301b can be used to train a prediction model 301a using inferred user attributes that are inferred by another machine learning model along with the contextual information and feature values for online activity of users.

The system can train the prediction models 301a and 301b using the architectures 302 and 304 and the training data 212. In some implementations, the prediction models 301a and 301b are trained convolutional neural networks. A convolutional neural network includes multiple layers including convolutional layers, pooling layers, and fully connected layers. The system can provide an objective function (also referred to as a loss function) to be used by the convolutional neural network in minimizing the loss function during training. The system can use appropriate training methods other than the convolutional neural network, including supervised machine learning (e.g., random forest), regression, naive Bayes classifier, and other variations of neural network. As outputs of training prediction models, the system obtains a first prediction model 301a and a second prediction model 301b.

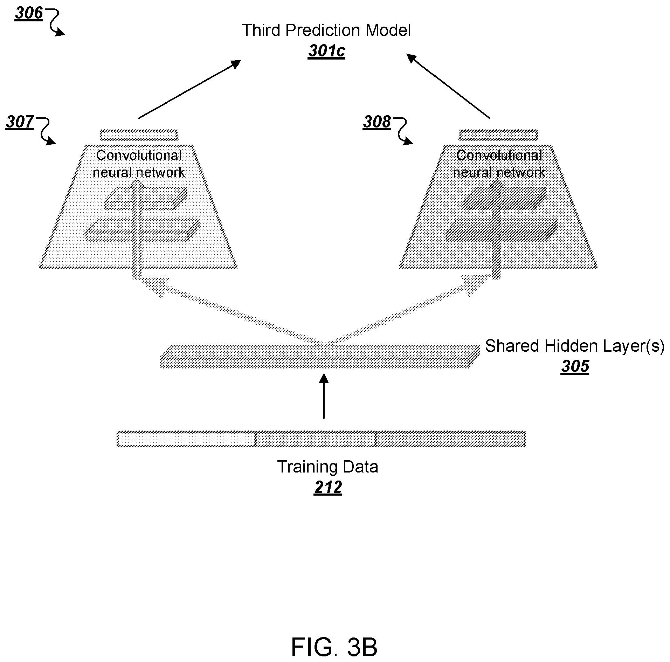

Referring to FIG. 3B, the system can train a third (shared) prediction model 301c that is used to predict user attributes of users using a third architecture 306. In this architecture 306, two convolutional neural networks 307 and 308 are trained and share common hidden layers 305. The first convolutional neural network 307 can be trained similarly to the convolutional neural network of prediction model 301a, e.g., using the same type of training data. Similarly, the second convolutional neural network 308 can be trained similarly to the convolutional neural network of prediction model 301b, e.g., using the same type of training data. One advantage of the third prediction model 301c is that the system can reuse some of the data and/or models of the prediction models 301a and 301b.

In some implementations, the system can add additional features to features 210. The additional features include previously predicted user attributes. These additional features can further enhance contextual predictions.

In some implementations, the system can train a meta-learner that predicts user attributes based on multiple pre-trained models. For example, the meta-learner can be an ensemble learner across the different training architectures (e.g., prediction models 301a, 301b, and 301c). The meta-learner can be trained by a cross-validation approach partitioning the training data 212 to training and validation sets.

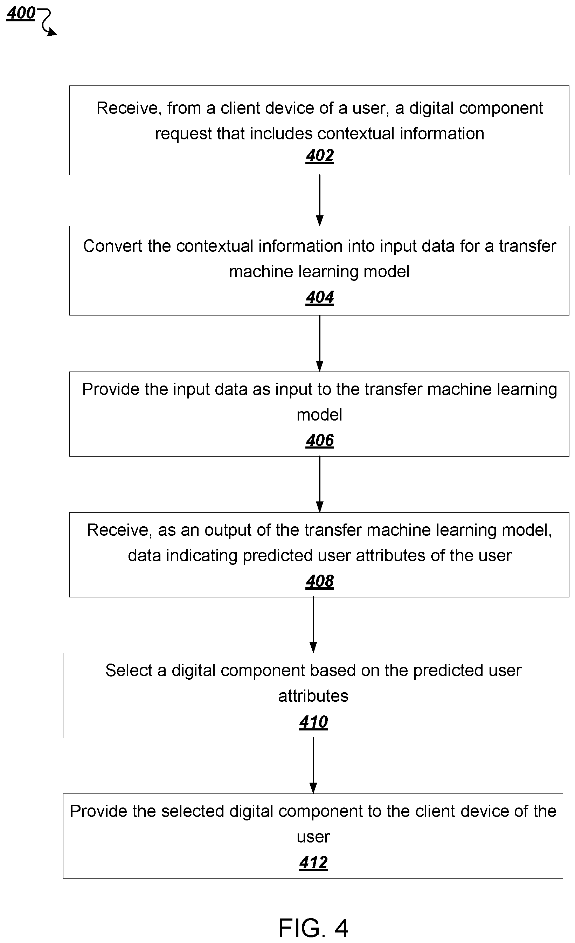

FIG. 4 is a flow diagram of an example process 400 for predicting attributes using a transfer learning model and sending a digital component to a client device based on the predicted attributes. The process 400 will be described as being performed by a system of one or more computers programmed appropriately in accordance with this specification. For example, the digital component distribution system 100 or the system 200 (e.g., the attribute prediction engine 142 and the digital component selection engine 144) can perform at least a portion of the example process 400. In some implementations, various steps of the process 400 can be run in parallel, in combination, in loops, or in any order.

The system receives, from a client device of a user, a digital component request (402). The digital component request can be to request a digital component to display with an electronic resource at the client device. The digital component request can include, for example, input contextual information for a display environment in which a selected digital component will be displayed. As described above, the input contextual information can include client device attributes of the subscribing users, e.g., information indicative of an operating system of the client device used by the user to view content of the electronic resource, a type of browser or native application used to view the content at the client device, a display size or type of the client device, and/or other appropriate information about the client device. The input contextual features can also include attributes of the electronic resource with which the selected digital component will be displayed, e.g., a resource address for the electronic resource, a category (e.g., topic) of the electronic resource, and/or other appropriate information about the electronic resource. The input contextual features can also include a time (e.g., time of day, day of week, month of year, etc.) at which the digital component request was generated, a geographic location of the client device, a type of data traffic, and/or other appropriate contextual information.

The system converts the contextual information into input data for a transfer machine learning model (404). For example, the system can generate feature values for features that represent the contextual information.

As described above, the transfer machine learning model can be trained based on training data for a set of users. For example, the transfer machine learning model can be trained using training data obtained for subscriber users from a data pipeline associated with electronic resources to which the subscriber users are subscribed. In a particular example, the training data can be obtained from a data pipeline of a content platform that displays content to users subscribed to the content platform and that have provided user attribute information to the content platform. The training data can include first feature values for features representing training contextual information for display environments in which digital components were displayed to the subscriber users, second feature values for online activity of the subscriber users, and a label representing a user attribute profile for each of the subscriber users. The label for a subscribing user can indicate one or more user attributes of the subscribing user.

In some implementations, the system can retrain the prediction model, e.g., by altering the training architecture, training data, and/or features. The attribute prediction engine 142 can output the performance of the trained model on the attribute prediction. Based on analyzing if the performance meets a particular threshold, the attribute prediction engine 142 can optimize or at least improve the training scheme.

As described above, the transfer machine learning model can be adapted to predict user attributes of non-subscribing users viewing electronic resources to which the non-subscribing users are not subscribed.

The system provides the input data as input to the transfer machine learning model (406). The system can execute the machine learning model on the input data to generate predicted user attributes of the user. The system receives, as an output of the transfer machine learning model, data indicating predicted attributes of the user (408).

The system selects a digital component based on the predicted user attributes (410). The system can select, from a set of digital components, a digital component based on the predicted user attributes for the user and optionally additional information. This ensures that the digital component selected is appropriate for the user and will not waste bandwidth when it is sent to the user. The additional information can include, for example, current time, the location of the client device 102 that sent the digital component request, the contextual information of the digital component request, distribution criteria for the digital components, and/or selection values indicating amounts that digital component providers are willing to provide to publishers for displaying the digital components.

The system provides the selected digital component to the client device of the user (412). The client device can then display the digital component, e.g., with an electronic resource being displayed at the client device.

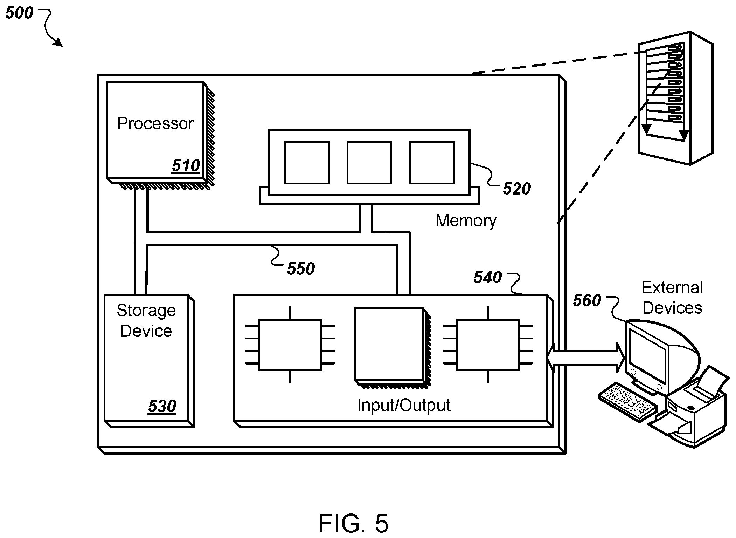

FIG. 5 is a block diagram of an example computer system 500 that can be used to perform operations described above. The system 500 includes a processor 510, a memory 520, a storage device 530, and an input/output device 540. Each of the components 510, 520, 530, and 540 can be interconnected, for example, using a system bus 550. The processor 510 is capable of processing instructions for execution within the system 500. In some implementations, the processor 510 is a single-threaded processor. In another implementation, the processor 510 is a multi-threaded processor. The processor 510 is capable of processing instructions stored in the memory 520 or on the storage device 530.

The memory 520 stores information within the system 500. In one implementation, the memory 520 is a computer-readable medium. In some implementations, the memory 520 is a volatile memory unit. In another implementation, the memory 520 is a non-volatile memory unit.

The storage device 530 is capable of providing mass storage for the system 500. In some implementations, the storage device 530 is a computer-readable medium. In various different implementations, the storage device 530 can include, for example, a hard disk device, an optical disk device, a storage device that is shared over a network by multiple computing devices (e.g., a cloud storage device), or some other large capacity storage device.

The input/output device 540 provides input/output operations for the system 400. In some implementations, the input/output device 540 can include one or more of a network interface devices, e.g., an Ethernet card, a serial communication device, e.g., and RS-232 port, and/or a wireless interface device, e.g., and 802.11 card. In another implementation, the input/output device can include driver devices configured to receive input data and send output data to external devices 560, e.g., keyboard, printer and display devices. Other implementations, however, can also be used, such as mobile computing devices, mobile communication devices, set-top box television client devices, etc.

Although an example processing system has been described in FIG. 5, implementations of the subject matter and the functional operations described in this specification can be implemented in other types of digital electronic circuitry, or in computer software, firmware, or hardware, including the structures disclosed in this specification and their structural equivalents, or in combinations of one or more of them.

This specification uses the term "configured" in connection with systems and computer program components. For a system of one or more computers to be configured to perform particular operations or actions means that the system has installed on it software, firmware, hardware, or a combination of them that in operation cause the system to perform the operations or actions. For one or more computer programs to be configured to perform particular operations or actions means that the one or more programs include instructions that, when executed by data processing apparatus, cause the apparatus to perform the operations or actions.

Embodiments of the subject matter and the functional operations described in this specification can be implemented in digital electronic circuitry, in tangibly-embodied computer software or firmware, in computer hardware, including the structures disclosed in this specification and their structural equivalents, or in combinations of one or more of them. Embodiments of the subject matter described in this specification can be implemented as one or more computer programs, i.e., one or more modules of computer program instructions encoded on a tangible storage medium, which may be non-transitory, for execution by, or to control the operation of, data processing apparatus. The computer storage medium can be a machine-readable storage device, a machine-readable storage substrate, a random or serial access memory device, or a combination of one or more of them. Alternatively or in addition, the program instructions can be encoded on an artificially generated propagated signal, e.g., a machine-generated electrical, optical, or electromagnetic signal that is generated to encode information for transmission to suitable receiver apparatus for execution by a data processing apparatus.

The term "data processing apparatus" refers to data processing hardware and encompasses all kinds of apparatus, devices, and machines for processing data, including by way of example a programmable processor, a computer, or multiple processors or computers. The apparatus can also be, or further include, special purpose logic circuitry, e.g., an FPGA (field programmable gate array) or an ASIC (application specific integrated circuit). The apparatus can optionally include, in addition to hardware, code that creates an execution environment for computer programs, e.g., code that constitutes processor firmware, a protocol stack, a database management system, an operating system, or a combination of one or more of them.

A computer program, which may also be referred to or described as a program, software, a software application, an app, a module, a software module, a script, or code, can be written in any form of programming language, including compiled or interpreted languages, or declarative or procedural languages; and it can be deployed in any form, including as a standalone program or as a module, component, subroutine, or other unit suitable for use in a computing environment. A program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub programs, or portions of code. A computer program can be deployed to be executed on one computer or on multiple computers that are located at one site or distributed across multiple sites and interconnected by a data communication network.

In this specification, the term "database" is used broadly to refer to any collection of data: the data does not need to be structured in any particular way, or structured at all, and it can be stored on storage devices in one or more locations. Thus, for example, the index database can include multiple collections of data, each of which may be organized and accessed differently.

Similarly, in this specification the term "engine" is used broadly to refer to a software-based system, subsystem, or process that is programmed to perform one or more specific functions. Generally, an engine will be implemented as one or more software modules or components, installed on one or more computers in one or more locations. In some cases, one or more computers will be dedicated to a particular engine; in other cases, multiple engines can be installed and running on the same computer or computers.

The processes and logic flows described in this specification can be performed by one or more programmable computers executing one or more computer programs to perform functions by operating on input data and generating output. The processes and logic flows can also be performed by special purpose logic circuitry, e.g., an FPGA or an ASIC, or by a combination of special purpose logic circuitry and one or more programmed computers.

Computers suitable for the execution of a computer program can be based on general or special purpose microprocessors or both, or any other kind of central processing unit. Generally, a central processing unit will receive instructions and data from a read only memory or a random access memory or both. The essential elements of a computer are a central processing unit for performing or executing instructions and one or more memory devices for storing instructions and data. The central processing unit and the memory can be supplemented by, or incorporated in, special purpose logic circuitry. Generally, a computer will also include, or be operatively coupled to receive data from or transfer data to, or both, one or more mass storage devices for storing data, e.g., magnetic, magneto optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

Computer readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's device in response to requests received from the web browser. Also, a computer can interact with a user by sending text messages or other forms of message to a personal device, e.g., a smartphone that is running a messaging application, and receiving responsive messages from the user in return.

Data processing apparatus for implementing machine learning models can also include, for example, special-purpose hardware accelerator units for processing common and compute-intensive parts of machine learning training or production, i.e., inference, workloads.

Machine learning models can be implemented and deployed using a machine learning framework, e.g., a TensorFlow framework, a Microsoft Cognitive Toolkit framework, an Apache Singa framework, or an Apache MXNet framework.

Embodiments of the subject matter described in this specification can be implemented in a computing system that includes a back end component, e.g., as a data server, or that includes a middleware component, e.g., an application server, or that includes a front end component, e.g., a client computer having a graphical user interface, a web browser, or an app through which a user can interact with an implementation of the subject matter described in this specification, or any combination of one or more such back end, middleware, or front end components. The components of the system can be interconnected by any form or medium of digital data communication, e.g., a communication network. Examples of communication networks include a local area network (LAN) and a wide area network (WAN), e.g., the Internet.

The computing system can include clients and servers. A client and server are generally remote from each other and typically interact through a communication network. The relationship of client and server arises by virtue of computer programs running on the respective computers and having a client-server relationship to each other. In some embodiments, a server transmits data, e.g., an HTML page, to a user device, e.g., for purposes of displaying data to and receiving user input from a user interacting with the device, which acts as a client. Data generated at the user device, e.g., a result of the user interaction, can be received at the server from the device.

Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially be claimed as such, one or more features from a claimed combination can in some cases be excised from the combination, and the claimed combination may be directed to a subcombination or variation of a subcombination.

Similarly, while operations are depicted in the drawings and recited in the claims in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims. For example, the actions recited in the claims can be performed in a different order and still achieve desirable results. As one example, the processes depicted in the accompanying figures do not necessarily require the particular order shown, or sequential order, to achieve desirable results. In some cases, multitasking and parallel processing may be advantageous.

## Claims

1. A computer-implemented method, comprising:
receiving, from a client device (102) of a user, a digital component request comprising at least input contextual information for a display environment in which a selected digital component will be displayed;
converting the contextual information into input data comprising input feature values for a transfer machine learning model trained to output predictions of user attributes of users based on feature values for features representing display environments, wherein the transfer machine learning model is (i) trained using training data for subscriber users obtained from a data pipeline associated with electronic resources to which the subscriber users are subscribed and (ii) adapted to predict user attributes of non-subscribing users viewing electronic resources to which the non-subscribing users are not subscribed, wherein the training data comprises first feature values for features representing training contextual information for display environments in which digital components were displayed to the subscriber users, second feature values for online activity of the subscriber users, and a label representing a user attribute profile for each of the subscriber users;
providing, as an input to the transfer machine learning model, the input data;
receiving, as an output of the transfer machine learning model, data indicating a set of predicted user attributes of the user;
selecting, from a plurality of digital components and based at least in part on the set of predicted user attributes, a given digital component for display at the client device; and
sending the given digital component to the client device of the user,
wherein the training contextual information for display environments in which digital components were displayed to the subscriber users comprises, for each user visit to the electronic resources to which the subscriber users are subscribed, at least one of (i) information indicative of an electronic resource address of the electronic resource, (ii) a category of the electronic resource, (iii) a time at which the user visit occurred, (iv) a geographic location of a client device used to visit the electronic resource, or (v) a type of data traffic for the user visit.

2. The method of claim 1, wherein the electronic resources to which the subscriber users are subscribed comprise content platforms that display content to the subscribing users.

3. The method of claim 1 or 2, wherein the training contextual information for display environments in which digital components were displayed to the subscriber users comprises client device attributes of subscribing users, the client device attributes of each individual client device comprising at least one of (i) information indicative of one or more of an operating system of the individual client device, or (ii) a type of browser of the individual client device.

4. The method of any preceding claim, wherein the second feature values for online activity of the subscriber users comprise feature values for features indicative of digital components with which the subscriber users interacted during the user visits, including feature values indicative of a category for each digital component.

5. The method of any preceding claim, wherein the second feature values for online activity of the subscriber users comprise feature values for features indicative of one or more of (i) selecting a user selectable element, (ii) providing a search query, or (iii) viewing a particular page.

6. The method of any preceding claim, further comprising generating the transfer machine learning model based on the first feature values and the second feature values.

7. The method of claim 6, wherein generating the transfer machine learning model comprises training a neural network with an objective function.

8. The method of any preceding claim, further comprising:
providing the set of predicted user attributes of the user as input to a second machine learning model trained to predict user engagement with digital components based on user attributes; and
receiving, as an output of the second machine learning model and for each digital component in the plurality of digital components, output data indicating a predicted likelihood that the user will interact with the digital component,
wherein selecting the given digital component comprises selecting the given digital component based at least on the predicted likelihood for each of the plurality of digital components.

9. A system (500) comprising one or more computers (510) and one or more storage devices (530) storing instructions that when executed by the one or more computers cause the one or more computers to perform the method of any one of preceding claims.

10. One or more computer storage media storing instructions that when executed by one or more computers cause the one or more computers to perform the method of any one of claims 1 to 8.

11. A computer program product comprising instructions that, when executed by a computer, cause the computer to perform the method of any of claims 1 to 8.

## Patentansprüche

1. Computerimplementiertes Verfahren, umfassend:
Empfangen, von einem Client-Gerät (102) eines Benutzers, einer digitalen Komponentenanforderung, die zumindest Eingangskontextinformationen für eine Anzeigeumgebung umfasst, in der eine ausgewählte digitale Komponente angezeigt werden soll;
Konvertieren der Kontextinformationen in Eingabedaten, die Eingabemerkmalswerte für ein Transfer-Maschinenlernmodell umfassen, das trainiert ist, Vorhersagen von Benutzerattributen von Benutzern auf der Grundlage von Merkmalswerten für Merkmale auszugeben, die Anzeigeumgebungen darstellen, wobei das Transfer-Maschinenlernmodell: (i) unter Verwendung von Trainingsdaten für Abonnentenbenutzer trainiert ist, die aus einer Datenpipeline erhalten wurden, die mit elektronischen Ressourcen verbunden ist, auf die die Abonnentenbenutzer abonniert sind, und (ii) angepasst ist, um Benutzerattribute von nicht-abonnierenden Benutzern vorherzusagen, die elektronische Ressourcen betrachten, auf die sie nicht abonniert sind, wobei die Trainingsdaten Folgendes umfassen: erste Merkmalswerte für Merkmale, die Trainingskontextinformationen für Anzeigeumgebungen darstellen, in denen digitale Komponenten den Abonnentenbenutzern angezeigt wurden, zweite Merkmalswerte für Online-Aktivitäten der Abonnentenbenutzer, und ein Label, das ein Benutzerattributprofil für jeden der Abonnentenbenutzer darstellt;
Bereitstellen der Eingabedaten als Eingabe für das Transfer-Maschinenlernmodell;
Empfangen, als Ausgabe des Transfer-Maschinenlernmodells, von Daten, die einen Satz vorhergesagter Benutzerattribute des Benutzers anzeigen;
Auswählen, aus einer Vielzahl digitaler Komponenten und zumindest teilweise auf Grundlage des Satzes vorhergesagter Benutzerattribute, einer gegebenen digitalen Komponente zur Anzeige auf dem Client-Gerät; und
Senden der gegebenen digitalen Komponente an das Client-Gerät des Benutzers,
wobei die Trainingskontextinformationen für Anzeigeumgebungen, in denen digitale Komponenten den Abonnentenbenutzern angezeigt wurden, für jeden Benutzerbesuch bei den abonnierten elektronischen Ressourcen mindestens einen der folgenden Punkte umfassen: (i) Informationen, die eine elektronische Ressourcenadresse angeben, (ii) eine Kategorie der elektronischen Ressource, (iii) einen Zeitpunkt des Benutzerbesuchs, (iv) einen geografischen Standort eines zum Zugriff verwendeten Client-Geräts, oder (v) eine Art des Datenverkehrs für den Benutzerbesuch.

2. Verfahren nach Anspruch 1, wobei die elektronischen Ressourcen, auf die die Abonnentenbenutzer abonniert sind, Inhaltsplattformen umfassen, die Inhalte an die Abonnentenbenutzer anzeigen.

3. Verfahren nach Anspruch 1 oder 2, wobei die Trainingskontextinformationen für Anzeigeumgebungen, in denen digitale Komponenten den Teilnehmerbenutzern angezeigt wurden, Clientgeräteattribute von Teilnehmerbenutzern umfassen, wobei die Clientgeräteattribute jedes einzelnen Clientgeräts mindestens eine der folgenden Informationen umfassen: (i) Informationen, die ein oder mehrere Betriebssysteme des einzelnen Clientgeräts angeben, oder (ii) einen Typ von Browser des einzelnen Clientgeräts.

4. Verfahren nach einem der vorhergehenden Ansprüche, wobei die zweiten Merkmalswerte für die Online-Aktivität der Teilnehmerbenutzer Merkmalswerte für Merkmale umfassen, die digitale Komponenten angeben, mit denen die Teilnehmerbenutzer während der Benutzerbesuche interagiert haben, einschließlich Merkmalswerten, die eine Kategorie für jede digitale Komponente angeben.

5. Verfahren nach einem der vorhergehenden Ansprüche, wobei die zweiten Merkmalswerte für die Online-Aktivität der Teilnehmerbenutzer Merkmalswerte für Merkmale umfassen, die eines oder mehrere der folgenden Merkmale angeben: (i) Auswählen eines vom Benutzer auswählbaren Elements, (ii) Eingeben einer Suchanfrage oder (iii) Betrachten einer bestimmten Seite.

6. Verfahren nach einem der vorhergehenden Ansprüche, ferner umfassend das Erzeugen des Transfer-Maschinenlernmodells auf der Grundlage der ersten Merkmalswerte und der zweiten Merkmalswerte.

7. Verfahren nach Anspruch 6, wobei das Erzeugen des Transfer-Maschinenlernmodells das Trainieren eines neuronalen Netzes mit einer Zielfunktion umfasst.

8. Verfahren nach einem der vorhergehenden Ansprüche, ferner umfassend:
Bereitstellen des Satzes vorhergesagter Benutzerattribute des Benutzers als Eingabe für ein zweites maschinelles Lernmodell, das darauf trainiert ist, die Benutzerinteraktion mit digitalen Komponenten auf der Grundlage von Benutzerattributen vorherzusagen; und
Empfangen, als Ausgabe des zweiten maschinellen Lernmodells und für jede digitale Komponente in der Vielzahl digitaler Komponenten, von Ausgabedaten, die eine vorhergesagte Wahrscheinlichkeit angeben, dass der Benutzer mit der digitalen Komponente interagieren wird,
wobei das Auswählen der gegebenen digitalen Komponente das Auswählen der gegebenen digitalen Komponente zumindest auf der Grundlage der vorhergesagten Wahrscheinlichkeit für jede der Vielzahl digitaler Komponenten umfasst.

9. System (500), umfassend einen oder mehrere Computer (510) und eine oder mehrere Speichervorrichtungen (530), die Anweisungen speichern, die, wenn sie von dem einen oder den mehreren Computern ausgeführt werden, den einen oder die mehreren Computer veranlassen, das Verfahren nach einem der vorhergehenden Ansprüche durchzuführen.

10. Computerspeichermedien, umfassend Anweisungen, die, wenn sie von einem oder mehreren Computern ausgeführt werden, den einen oder die mehreren Computer veranlassen, das Verfahren nach einem der Ansprüche 1 bis 8 durchzuführen.

11. Computerprogrammprodukt, umfassend Anweisungen, die, wenn sie von einem Computer ausgeführt werden, den Computer veranlassen, das Verfahren nach einem der Ansprüche 1 bis 8 durchzuführen.

## Revendications

1. Procédé mis en œuvre par ordinateur, comprenant :
la réception, à partir d'un dispositif client (102) d'un utilisateur, d'une demande de composant numérique comprenant au moins des informations contextuelles d'entrée pour un environnement d'affichage dans lequel un composant numérique sélectionné sera affiché ;
la conversion des informations contextuelles en données d'entrée comprenant des valeurs de caractéristiques d'entrée pour un modèle d'apprentissage automatique de transfert entraîné pour produire des prédictions d'attributs d'utilisateur d'utilisateurs sur la base de valeurs de caractéristiques pour des caractéristiques représentant des environnements d'affichage, dans lequel le modèle d'apprentissage automatique de transfert est (i) entraîné à l'aide de données d'entraînement pour les utilisateurs abonnés obtenues à partir d'un pipeline de données associé à des ressources électroniques auxquelles les utilisateurs abonnés sont abonnés et (ii) adapté pour prédire des attributs d'utilisateur d'utilisateurs non abonnés visualisant des ressources électroniques auxquelles les utilisateurs non abonnés ne sont pas abonnés, dans lequel les données d'entraînement comprennent des premières valeurs de caractéristiques pour des caractéristiques représentant des informations contextuelles d'entraînement pour des environnements d'affichage dans lesquels des composants numériques ont été affichés aux utilisateurs abonnés, des secondes valeurs de caractéristiques pour l'activité en ligne des utilisateurs abonnés, et une étiquette représentant un profil d'attribut d'utilisateur pour chacun des utilisateurs abonnés ;
la fourniture, en tant qu'entrée au modèle d'apprentissage automatique de transfert, des données d'entrée ;
la réception, en tant que sortie du modèle d'apprentissage automatique de transfert, de données indiquant un ensemble d'attributs d'utilisateur prédits de l'utilisateur ;
la sélection, parmi une pluralité de composants numériques et sur la base au moins en partie de l'ensemble d'attributs d'utilisateur prédits, d'un composant numérique donné à afficher sur le dispositif client ; et
l'envoi du composant numérique donné au dispositif client de l'utilisateur,
dans lequel les informations contextuelles d'entraînement pour les environnements d'affichage dans lesquels des composants numériques ont été affichés aux utilisateurs abonnés comprennent, pour chaque visite d'utilisateur aux ressources électroniques auxquelles les utilisateurs abonnés sont abonnés, au moins l'une des informations suivantes : (i) des informations indiquant une adresse de ressource électronique de la ressource électronique, (ii) une catégorie de la ressource électronique, (iii) une heure à laquelle la visite de l'utilisateur a eu lieu, (iv) un emplacement géographique d'un dispositif client utilisé pour visiter la ressource électronique, ou (v) un type de trafic de données pour la visite de l'utilisateur.

2. Procédé selon la revendication 1, dans lequel les ressources électroniques auxquelles les utilisateurs abonnés sont abonnés comprennent des plates-formes de contenu qui affichent du contenu aux utilisateurs abonnés.

3. Procédé selon la revendication 1 ou 2, dans lequel les informations contextuelles d'entraînement pour les environnements d'affichage dans lesquels des composants numériques ont été affichés aux utilisateurs abonnés comprennent des attributs de dispositif client des utilisateurs abonnés, les attributs de dispositif client de chaque dispositif client individuel comprenant au moins l'une des informations suivantes : (i) des informations indiquant l'un ou plusieurs d'un système d'exploitation du dispositif client individuel, ou (ii) un type de navigateur du dispositif client individuel.

4. Procédé selon une quelconque revendication précédente, dans lequel les secondes valeurs de caractéristiques pour l'activité en ligne des utilisateurs abonnés comprennent des valeurs de caractéristiques pour des caractéristiques indiquant des composants numériques avec lesquels les utilisateurs abonnés ont interagi pendant les visites d'utilisateur, y compris des valeurs de caractéristiques indiquant une catégorie pour chaque composant numérique.

5. Procédé selon une quelconque revendication précédente, dans lequel les secondes valeurs de caractéristiques pour l'activité en ligne des utilisateurs abonnés comprennent des valeurs de caractéristiques pour des caractéristiques indiquant l'une ou plusieurs de (i) la sélection d'un élément sélectionnable par l'utilisateur, (ii) la fourniture d'une requête de recherche, ou (iii) la visualisation d'une page particulière.

6. Procédé selon une quelconque revendication précédente, comprenant également la génération du modèle d'apprentissage automatique de transfert sur la base des premières valeurs de caractéristiques et des secondes valeurs de caractéristiques.

7. Procédé selon la revendication 6, dans lequel la génération du modèle d'apprentissage automatique de transfert comprend l'entraînement d'un réseau neuronal avec une fonction objective.

8. Procédé selon une quelconque revendication précédente, comprenant également :
la fourniture de l'ensemble d'attributs d'utilisateur prédits de l'utilisateur en tant qu'entrée à un second modèle d'apprentissage automatique entraîné pour prédire l'engagement de l'utilisateur avec des composants numériques sur la base d'attributs d'utilisateur ; et
la réception, en tant que sortie du second modèle d'apprentissage automatique et pour chaque composant numérique dans la pluralité de composants numériques, de données de sortie indiquant une probabilité prédite que l'utilisateur interagira avec le composant numérique,
dans lequel la sélection du composant numérique donné comprend la sélection du composant numérique donné sur la base au moins de la probabilité prédite pour chacun de la pluralité de composants numériques.

9. Système (500) comprenant un ou plusieurs ordinateurs (510) et un ou plusieurs dispositifs de stockage (530) stockant des instructions qui, lorsqu'elles sont exécutées par les un ou plusieurs ordinateurs, amènent les un ou plusieurs ordinateurs à réaliser le procédé selon l'une quelconque des revendications précédentes.

10. Un ou plusieurs supports de stockage informatiques stockant des instructions qui, lorsqu'elles sont exécutées par un ou plusieurs ordinateurs, amènent les un ou plusieurs ordinateurs à réaliser le procédé selon l'une quelconque des revendications 1 à 8.

11. Produit de programme informatique comprenant des instructions qui, lorsqu'elles sont exécutées par un ordinateur, amènent l'ordinateur à réaliser le procédé selon l'une quelconque des revendications 1 à 8.
